# EUROPÄISCHE PATENTSCHRIFT

(11) **EP 3 916 285 B1**
(45) Veröffentlichungstag und Bekanntmachung des Hinweises auf die Patenterteilung: **08.05.2024**
(21) Anmeldenummer: 21166185.5
(22) Anmeldetag: 31.03.2021
(51) Int. Cl.: F16N 7/40, F16N 39/02, F16N 31/00, D21F 7/00, D21G 1/02, F16N 29/00, G01N 1/20

(54) **ANLAGE UND VERFAHREN ZUR VERSORGUNG EINER SCHMIERSTELLE MIT SCHMIERÖL**
SYSTEM AND METHOD FOR SUPPLYING A LUBRICATION POINT WITH LUBRICATING OIL
SYSTÈME ET PROCÉDÉ D'ALIMENTATION D'UN POSTE DE LUBRIFICATION EN HUILE DE LUBRIFICATION

(30) Priorität: 28.05.2020 DE 102020114316
(43) Veröffentlichungstag der Anmeldung: 01.12.2021
(73) Patentinhaber: Voith Patent GmbH, 89522 Heidenheim (DE)
(72) Erfinder: DAUNER, Martin, 89542 Herbrechtingen (DE); BERGER, Andreas, 89568 Hermaringen (DE); LAUPHEIMER, Ulrich, 89155 Erbach (DE)
(74) Vertreter: Voith Patent GmbH - Patentabteilung

(56) Entgegenhaltungen:
- WO-A1-00/32980
- WO-A1-2014/019587
- WO-A1-2020/007545
- US-A1- 2013 183 138

## Beschreibung

Die Erfindung betrifft eine Anlage zur Versorgung von mindestens einer Schmierstelle einer Maschine mit Schmieröl, insbesondere einer Maschine zur Herstellung, Bearbeitung und Verarbeitung von Faserstoffbahnen, umfassend folgende, durch Leitungen hydraulisch zu einem Schmierölkreislauf verbundene Komponenten: einen Schmierölvorratsbehälter, mindestens eine Förderpumpe, einen, vorzugsweise mit Kühlwasser betreibbaren, Wärmetauscher zur Kühlung des umlaufenden Schmieröls und mindestens einer Schmierstelle, wobei die mindestens eine Schmierstelle wiederum mit dem Schmierölvorratsbehälter hydraulisch durch eine Leitung verbunden ist und der Schmierölkreislauf von dem Schmieröl in einer Durchflussrichtung durchströmt ist, wobei ein Schmierölstrang vorgesehen und ausgeführt ist zur Entnahme einer Teilmenge von Schmieröl aus dem Schmierölkreislauf an einer Entnahmestelle und Rückführung des entnommenen Schmieröls in den Schmierölkreislauf an einer Einleitungsstelle.

Die Erfindung betrifft auch ein Verfahren zur Versorgung von mindestens einer Schmierstelle einer Maschine mit Schmieröl.

Vorrichtungen dieser Art sind bekannt. Im Dokument WO2014/019587A1 ist ein Schmiersystem zur Versorgung mehrerer Verbraucher mit Schmieröl, beispielsweise einer Windkraftanlage, offenbart. Ein Teil des durch die Verbraucher geströmte Schmieröl kann selektiv durch separate Abzweigleitungen jeweils einer Messeinrichtung zugeführt werden und die charakteristischen Eigenschaften des Schmieröls, zwecks Überwachung der Verbraucher, bestimmt werden.

In Papiermaschinen wird beispielsweise eine Vielzahl von Walzenlagerungen durch eine Zentralölschmierung gemeinsam mit Schmieröl versorgt. Das Schmieröl erreicht im Betrieb der Maschine eine Betriebstemperatur, beispielsweise von 60°C und nimmt während des Betriebs Wasser aus der Umgebung auf bis die Sättigungsgrenze für Wasser in Öl erreicht ist. Mit steigender Temperatur steigt auch die Sättigungsgrenze. Daraus ergibt sich jedoch das Problem des frei werdenden Wassers nach dem Abstellen der Maschine durch beim Abkühlen des Schmieröls im Zustand des Stillstandes. Das dann frei werdende Wasser kann zu Korrosion von Lagerkomponenten und in der Folge zu kürzeren Wartungsintervallen der gesamten Produktionslinie führen. Um diesem Problem entgegen zu wirken, wird nach der Inbetriebnahme der Maschine der relative Wassergehalt von entnommenen Schmierölproben bei verschiedenen Temperaturen im Labor gemessen und Referenzkurven für den relativen Wassergehalt in Abhängigkeit von der Schmieröltemperatur und Ölsorte bestimmt. Mit
diesen Referenzkurven wird während des Betriebs der Wassergehalt überwacht und überprüft ob für diesen Wassergehalt bei einer niedrigeren Stillstandtemperatur von beispielsweise 20°C die Sättigungsgrenze für die Wasseraufnahme des Schmieröls erreicht ist. Da die Bestimmung der Referenzkurven nicht sehr genau ist kann es trotzdem zum Freiwerden von absorbiertem Wasser im Schmieröl während des Stillstandes der Maschine zu einer geringen Betriebssicherheit führen. Zudem wird oftmals beim Tauschen des Öls eine andere Ölsorte verwendet, wodurch die teure und aufwändige Prozedur zur Bestimmung der Referenzkurven wiederholt werden muss.

Die Aufgabe der Erfindung ist es daher eine Vorrichtung und ein Verfahren zur Vermeidung von Korrosion in Schmierstellen einer Maschine und somit zur Erhöhung der Betriebssicherheit bei geringem Kostentaufwand anzugeben.

Die Aufgabe wird durch Merkmale des Anspruches 1 und durch das Verfahren nach Anspruch 10 gelöst. Es wird eine Anlage zur Versorgung von mindestens einer Schmierstelle einer Maschine mit Schmieröl, insbesondere einer Maschine zur Herstellung, Bearbeitung und Verarbeitung von Faserstoffbahnen vorgeschlagen, umfassend folgende, durch Leitungen hydraulisch zu einem Schmierölkreislauf verbundene Komponenten: einen Schmierölvorratsbehälter, mindestens eine Förderpumpe, einen, vorzugsweise mit Kühlwasser betreibbaren, Wärmetauscher zur Kühlung des umlaufenden Schmieröls und mindestens einer Schmierstelle, wobei die mindestens eine Schmierstelle wiederum mit dem Schmierölvorratsbehälter hydraulisch durch eine Leitung verbunden ist und der Schmierölkreislauf von dem Schmieröl in einer Durchflussrichtung durchströmt ist und ein Schmierölstrang vorgesehen und ausgeführt ist zur Entnahme einer Teilmenge von Schmieröl aus dem Schmierölkreislauf an einer Entnahmestelle und Rückführung des entnommenen Schmieröls in den Schmierölkreislauf an einer Einleitungsstelle. Die Erfindung zeichnet sich dadurch aus, dass der Schmierölstrang eine Kühlvorrichtung zur Kühlung des entnommenen Schmieröls umfasst und dass zwischen der Kühlvorrichtung und der Einleitungsstelle eine Messvorrichtung zur Bestimmung des relativen Wassergehalts im entnommenen Schmieröl angeordnet ist.

Vorzugsweise wird der relative Wassergehalt im Betrieb der Maschine kontinuierlich bestimmt. In manchen Fällen kann es auch ausreichend sein, den relativen Wassergehalt diskontinuierlich von Zeit zu Zeit zu messen.

Diese Lösung ermöglicht das Abkühlen der entnommenen Teilmenge des Schmieröls auf eine Abkühltemperatur und Messen des relativen Wassergehalts in der einer Teilmenge des Schmieröls bei dieser Abkühltemperatur. Die Abkühltemperatur entspricht vorzugsweise der Stillstandtemperatur. Somit kann auf einfache und zuverlässige Weise während des Betriebs der Maschine direkt überprüft werden, ob die Sättigungsgrenze für Wasser im Schmieröl bei der Abkühltemperatur beziehungsweise bei der Stillstandtemperatur, erreicht ist. In diesem Fall kann das Schmieröl gegen frisches Schmieröl ausgetauscht werden oder vorzugsweise kann dem Schmieröl durch Trocknungseinrichtungen Wasser entzogen werden.

Die Sättigungsgrenze von Wasser kann für eine bestimmte Schmierölsorte bei einer Betriebstemperatur von 60°C bei 500 ppm und bei einer Stillstandtemperatur von 20°C bei 200 ppm liegen. Hat das Öl bei 20°C einen also Wassergehalt von 200 ppm erreicht so beträgt der relative Wassergehalt 100%. Das Schmieröl muss getauscht oder regeneriert werden um Korrosionsschäden in den Schmierstellen zu vermeiden, obwohl im Betriebszustand bei 60°C die Sättigungsgrenze noch nicht erreicht ist.

Zur Bestimmung des "relativen Wassergehalts" kann nach der Kühlvorrichtung im Schmierölstrang eine Messvorrichtung, die einen Sensor oder Sensoren zur Messung der Dielektrizitätszahl, der elektrischen Leitfähigkeit, der Temperatur und den Druck des Schmieröls umfasst, vorgesehen sein. Aus den erhaltenen Messwerten kann eine Aussage über den Zustand des Schmieröls und über den relativen Wassergehalt des Schmieröls gemacht werden.

Die mindestens eine Schmierstelle kann ein Wälzlager und/oder ein Gleitlager und/oder ein Zahnradgetriebe umfassen.

In einem praktischen Fall kann der Schmierölkreislauf mindestens eine Heizvorrichtung zum Aufheizen des Schmieröls aufweisen. Die Heizvorrichtung kann einen Wärmetauscher umfassen. Das Aufheizen des Schmieröls wird vorzugsweise beim Wiederanfahren der Maschine vom Stillstandzustand in den Betriebszustand durchgeführt.

In Durchflussrichtung gesehen kann es vorteilhaft sein, wenn nach der Heizvorrichtung und vor der mindestens einen Schmierstelle der Schmierölkreislauf mit dem Schmierölvorratsbehälter direkt oder indirekt durch eine Bypass-Leitung verbunden ist. Dies ermöglicht ein schnelles Aufheizen des Schmieröls in einem kleineren Schmierölkreislauf.

Die Entnahmestelle für eine Teilmenge Schmieröl des Schmierölkreislaufes kann vorteilhafterweise in der Druckleitung oder in der Saugleitung der mindestens einen Förderpumpe angeordnet sein. Wird die Entnahmestelle für eine Teilmenge Schmieröl des Schmierölkreislaufes in der Druckleitung angeordnet, so besitzt die Teilmenge Schmieröl ungefähr den gleichen Druck wie das Schmieröl in den Schmierstellen. Dies kann die Genauigkeit der Bestimmung des relativen Wassergehalts im Schmierölstrang verbessern.

Die Einleitung für die entnommene Teilmenge des Schmieröls kann direkt oder indirekt in den Schmierölvorratsbehälter erfolgen. Die Einleitungsstelle kann also am Schmierölvorratsbehälter oder an der Bypass-Leitung oder am Schmierölkreislauf angeordnet sein.

In einem praktischen Fall kann die Kühlvorrichtung im Schmierölstrang einen mit Kühlwasser beaufschlagten Wärmetauscher umfassen. Das Kühlwasser kann dabei dem Kühlwasser entnommen sein, das für den Wärmetauscher zur Kühlung des Schmieröls im Betrieb verwendet wird.

In einer vorteilhaften Weiterbildung zur Bestimmung des relativen Wassergehalts im Schmieröl im Schmierölstrang durch die Messvorrichtung ist die Kühlvorrichtung so betreibbar, dass nach der Kühlvorrichtung eine vorgebbare Messtemperatur des Schmieröls einstellbar ist. Die Messvorrichtung umfasst vorteilhafterweise einen Regel- oder Steuerkreis der die gewünschte Messtemperatur, insbesondere die Stillstandtemperatur, durch Verändern der Kühlwassermenge einstellt.

Die Messtemperatur kann im Wesentlichen der Raumtemperatur, insbesondere während des Stillstandes der Maschine, entsprechen. Beispielsweise kann die Raumtemperatur der Stillstandtemperatur, das heißt der Temperatur des abgekühlten Schmieröls während des Stillstandes der Maschine, entsprechen.

Die Aufgabe wird auch durch ein Verfahren zum Betreiben einer Anlage zur Versorgung von mindestens einer Schmierstelle einer Maschine mit Schmieröl, insbesondere einer Maschine zur Herstellung, Bearbeitung und Verarbeitung von Faserstoffbahnen, gelöst. Die Anlage umfasst folgende, durch Leitungen zu einem Schmierölkreislauf verbundene Komponenten: einen Ölvorratsbehälter, mindestens eine Förderpumpe, einen Wärmetauscher zur Kühlung des umlaufenden Schmieröls und mindestens einer Schmierstelle, wobei die mindestens eine Schmierstelle wiederum mit dem Ölvorratsbehälter hydraulisch verbunden wird und wobei der Schmierölkreislauf von dem Schmieröl in einer Durchflussrichtung durchströmt wird und ein Schmierölstrang zur Entnahme einer Teilmenge von Schmieröl aus dem Schmierölkreislauf an einer Entnahmestelle und Rückführung des entnommenen Schmieröls in den Schmierölkreislauf an einer Einleitungsstelle vorgesehen wird. Erfindungsgemäß ist vorgesehen, dass das entnommene Schmieröl durch eine Kühlvorrichtung gekühlt wird und zwischen der Kühlvorrichtung und der Einleitungsstelle der relative Wassergehalt im entnommenen Schmieröl bestimmt wird.

Vorteilhafterweise wird der relative Wassergehalt im entnommenen Schmieröl durch die Messvorrichtung bei einer vorgebbaren Messtemperatur bestimmt und die vorgebbare Messtemperatur wird durch die Betriebsweise der Kühlvorrichtung eingestellt.

In einem möglichen praktischen Fall wird als Messtemperatur im Wesentlichen die Raumtemperatur, insbesondere während des Stillstandes der Maschine, vorgegeben.

Weitere Merkmale und Vorteile der Erfindung ergeben sich aus der nachfolgenden Beschreibung eines bevorzugten Ausführungsbeispiels unter Bezugnahme auf die Zeichnung.

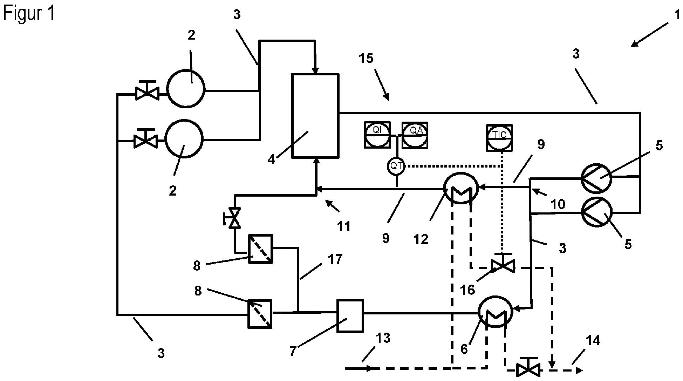

Die einzige Figur 1 zeigt ein Fließschema einer Anlage 1 zur Versorgung von mindestens einer Schmierstelle 2 einer Maschine mit Schmieröl. In diesem Beispiel handelt es sich um eine Maschine zur Herstellung, Bearbeitung und Verarbeitung von Faserstoffbahnen. Bei solchen Papiermaschinen versorgt die Anlage 1 eine Vielzahl von Lagerstellen von Walzen, von denen hier der Einfachheit halber nur zwei dargestellt sind, durch eine Zentralölschmierungsanlage mit Schmieröl. Diese Schmierstellen 2 sind zum Teil extremen Temperaturen und hoher Luftfeuchtigkeit ausgesetzt. Insbesondere innerhalb der Trockenpartie herrschen hohe Temperaturen bei hoher Luftfeuchtigkeit und auch dampfhaltiger Atmosphäre. Die Feuchtigkeit hat hier die Möglichkeit sich in dem Schmieröl bis zum Erreichen einer Sättigungsgrenze zu lösen. Da die Sättigungsgrenze temperaturabhängig ist kann es beim Abstellen der Maschine durch Abkühlen des Schmieröls zum Freiwerden des Wassers und somit zu Korrosion in den Lagerstellen führen. Durch die Ausführung der Anlage 1 nach Figur 1 wird dieses Problem behoben.

Die Anlage 1 umfasst die folgenden durch Leitungen hydraulisch zu einem Schmierölkreislauf verbundene Komponenten: einen Schmierölvorratsbehälter 4, mindestens eine Förderpumpe 5, wobei in diesem Beispiel zwei Förderpumpen 5 zur Erzeugung einer Schmierölströmung in Durchflussrichtung des Schmierölkreislaufes 3 vorgesehen sind, einen mit Kühlwasser betreibbaren, Wärmetauscher 6 zur Kühlung des umlaufenden Schmieröls im Betrieb der Maschine und -in diesem Beispiel- zwei Schmierstellen 2. Diese sind wiederum hydraulisch durch Metallleitungen oder Schläuche wiederum mit dem Schmierölvorratsbehälter 4 verbunden. Der Wärmetauscher 6 ist mit einem Kühlmittelzulauf 13 und einem Kühlmittelrücklauf 14 verbunden. Als Kühlmittel wird, wie schon erwähnt, Wasser verwendet. Zur Entnahme einer Teilmenge des Schmieröls aus dem Schmierölkreislauf 3 ist ein Schmierölstrang 9 vorgesehen. Er ist mit dem Schmierölkreislauf 3 nach dem Druckstutzen der Förderpumpen 5 über eine Entnahmestelle 10 zur Entnahme von einer Teilmenge von Schmieröl verbunden. Das entnommene Schmieröl wird im Schmierölstrang 9 zu einer Kühlvorrichtung 12 und weiter zu einer Einleitungsstelle 11, an der das entnommene Schmieröl wieder zurück in den Schmierölkreislauf 3 geleitet wird, geführt. Die Einleitungsstelle 11 befindet sich an der Bypass-Leitung 17. Als Kühlvorrichtung 12 ist ein Wärmetauscher vorgesehen, der ebenfalls mit einem Kühlmittelzulauf 13 und einem Kühlmittelrücklauf 14 verbunden ist. Zwischen der Kühlvorrichtung 12 und der Einleitungsstelle 11 ist eine Messvorrichtung 15 zur Ermittlung des relativen Wassergehalts im Schmieröl vorgesehen. Da die Ermittlung des relativen Wassergehalts bei einer gewünschten Schmiermitteltemperatur, die der Schmieröltemperatur im Stillstand der Maschine entspricht, ausgeführt wird, umfasst die Messvorrichtung 15 einen Temperatursensor im Schmierölstrang 9. Zur Erreichung der gewünschten Temperatur umfasst die Messvorrichtung 15 auch eine Steuer- oder Regeleinheit, welche über ein Regelventil 16 in der mit dem Kühlmittelrücklauf 14 verbundenen Leitung die Kühlleistung der Kühlvorrichtung 12 entsprechend beeinflusst. Durch die Messung des relativen Wassergehalts des Schmieröls bei einer Temperatur, die der abgekühlten Schmieröltemperatur im Stillstand der Maschine entspricht, kann die Bildung von freiem Wasser in den Schmierstellen 2 und somit Korrosion vermieden werden. In Durchflussrichtung nach dem Wärmetauscher 6 ist eine Heizungsvorrichtung 7, welche auch einen Wärmetauscher umfassen kann, und danach Abzweig zu einer Bypass-Leitung 17 zum schnellen Aufheizen des Schmieröls auf Betriebstemperatur vorgesehen. Die Bypass-Leitung 17 mündet nach einem optional einsetzbaren Filter 8 in den Schmierölvorratsbehälter 4. Zur Entfernung von Schmutzpartikel im Schmieröl ist im Schmierölkreislauf 3 ein Filter 8 vorgesehen.

### Bezugszeichenliste

- 1: Anlage
- 2: Schmierstelle
- 3: Schmierölkreislauf
- 4: Schmierölvorratsbehälter
- 5: Förderpumpe
- 6: Wärmetauscher
- 7: Heizungsvorrichtung
- 8: Filter
- 9: Schmierölstrang
- 10: Entnahmestelle
- 11: Einleitungsstelle
- 12: Kühlvorrichtung
- 13: Kühlmittelzulauf
- 14: Kühlmittelrücklauf
- 15: Messvorrichtung, Steuer-Regeleinheit
- 16: Regelventil
- 17: Bypass-Leitung

## Patentansprüche

1. Anlage (1) zur Versorgung von mindestens einer Schmierstelle (2) einer Maschine mit Schmieröl, insbesondere einer Maschine zur Herstellung, Bearbeitung und Verarbeitung von Faserstoffbahnen, umfassend folgende, durch Leitungen hydraulisch zu einem Schmierölkreislauf (3) verbundene Komponenten: einen Schmierölvorratsbehälter (4), mindestens eine Förderpumpe (5), einen, vorzugsweise mit Kühlwasser betreibbaren, Wärmetauscher (6) zur Kühlung des umlaufenden Schmieröls und mindestens einer Schmierstelle (2), wobei die mindestens eine Schmierstelle (2) wiederum mit dem Schmierölvorratsbehälter (4) hydraulisch durch eine Leitung verbunden ist und der Schmierölkreislauf (3) von dem Schmieröl in einer Durchflussrichtung durchströmt ist, wobei ein Schmierölstrang (9) vorgesehen und ausgeführt ist zur Entnahme einer Teilmenge von Schmieröl aus dem Schmierölkreislauf (3) an einer Entnahmestelle (10) und Rückführung des entnommenen Schmieröls in den Schmierölkreislauf (3) an einer Einleitungsstelle (11),
**dadurch gekennzeichnet, dass**
der Schmierölstrang (9) eine Kühlvorrichtung (12) zur Kühlung des entnommenen Schmieröls umfasst und dass zwischen der Kühlvorrichtung (12) und der Einleitungsstelle (11) eine Messvorrichtung (15) zur Bestimmung des relativen Wassergehalts im entnommenen Schmieröl angeordnet ist.

2. Anlage nach Anspruch 1,
**dadurch gekennzeichnet, dass**
die mindestens eine Schmierstelle (2) ein Wälzlager und/oder ein Gleitlager und/oder ein Zahnradgetriebe umfasst.

3. Anlage nach Anspruch 1 oder 2,
**dadurch gekennzeichnet, dass**
der Schmierölkreislauf (3) mindestens eine Heizvorrichtung (7) zum Aufheizen des Schmieröls aufweist.

4. Anlage nach Anspruch 3,
**dadurch gekennzeichnet, dass**
in Durchflussrichtung gesehen nach der Heizvorrichtung (7) und vor der mindestens einen Schmierstelle (2) der Schmierölkreislauf (3) mit dem Schmierölvorratsbehälter direkt oder indirekt durch eine Bypass-Leitung verbunden ist.

5. Anlage nach einem der vorhergehenden Ansprüche,
**dadurch gekennzeichnet, dass**
die Entnahmestelle (10) in der Druckleitung oder in der Saugleitung der mindestens einen Förderpumpe (5) angeordnet ist.

6. Anlage nach einem der vorhergehenden Ansprüche,
**dadurch gekennzeichnet, dass**
die Einleitungsstelle (10) am Schmierölvorratsbehälter (4) oder an der Bypass-Leitung (17) oder am Schmierölkreislauf (3) angeordnet ist.

7. Anlage nach einem der vorhergehenden Ansprüche,
**dadurch gekennzeichnet, dass**
die Kühlvorrichtung (12) einen mit Kühlwasser beaufschlagten Wärmetauscher umfasst.

8. Anlage nach einem der vorhergehenden Ansprüche,
**dadurch gekennzeichnet, dass**
zur Bestimmung des relativen Wassergehalts im Schmieröl im Schmierölstrang durch die Messvorrichtung (15) die Kühlvorrichtung (12) so betreibbar ist, dass nach der Kühlvorrichtung (12) eine vorgebbare Messtemperatur des Schmieröls einstellbar ist.

9. Anlage nach Anspruch 8,
**dadurch gekennzeichnet, dass**
die Messtemperatur im Wesentlichen der Raumtemperatur, insbesondere während des Stillstandes der Maschine, entspricht.

10. Verfahren zum Betreiben einer Anlage zur Versorgung von mindestens einer Schmierstelle (2) einer Maschine mit Schmieröl, insbesondere einer Maschine zur Herstellung, Bearbeitung und Verarbeitung von Faserstoffbahnen, wobei die Anlage folgende, durch Leitungen hydraulisch zu einem Schmierölkreislauf (3) verbundene Komponenten umfasst: einen Schmierölvorratsbehälter (4), mindestens eine Förderpumpe (5), einen Wärmetauscher (6) zur Kühlung des umlaufenden Schmieröls und mindestens einer Schmierstelle (2), wobei die mindestens eine Schmierstelle (2) wiederum mit dem Schmierölvorratsbehälter hydraulisch verbunden wird und wobei der Schmierölkreislauf (3) von dem Schmieröl in einer Durchflussrichtung durchströmt wird, wobei ein Schmierölstrang (9) zur Entnahme einer Teilmenge von Schmieröl aus dem Schmierölkreislauf (3) an einer Entnahmestelle (10) und Rückführung (11) des entnommenen Schmieröls in den Schmierölkreislauf (3) an einer Einleitungsstelle (11) vorgesehen wird,
**dadurch gekennzeichnet, dass**
das entnommene Schmieröl durch eine Kühlvorrichtung (12) gekühlt wird und zwischen der Kühlvorrichtung (12) und der Einleitungsstelle (11) der relative Wassergehalt im entnommenen Schmieröl bestimmt wird.

11. Verfahren nach Anspruch 10,
**dadurch gekennzeichnet, dass**
der relative Wassergehalt im entnommenen Schmieröl durch die Messvorrichtung (15) bei einer vorgebbare Messtemperatur bestimmt wird und die vorgebbare Messtemperatur durch die Betriebsweise der Kühlvorrichtung (12) eingestellt wird.

12. Verfahren nach Anspruch 11,
**dadurch gekennzeichnet, dass**
als Messtemperatur im Wesentlichen die Raumtemperatur, insbesondere während des Stillstandes der Maschine, vorgegeben wird.

## Claims

1. System (1) for supplying at least one lubrication point (2) of a machine with lubricating oil, in particular a machine for the production, processing and treatment of fibrous webs, comprising the following components hydraulically connected by lines to form a lubricating oil circuit (3): a lubricating oil reservoir (4), at least one feed pump (5), a heat exchanger (6), preferably operable with cooling water, for cooling the circulating lubricating oil and at least one lubrication point (2), wherein the at least one lubrication point (2) is in turn hydraulically connected to the lubricating oil reservoir (4) by a line and the lubricating oil circuit (3) is flowed through by the lubricating oil in a flow direction,
**characterized in that**
a lubricating oil line (9) is provided and designed for withdrawing a partial quantity of lubricating oil from the lubricating oil circuit (3) at a withdrawal point (10) and returning the withdrawn lubricating oil to the lubricating oil circuit (3) at a feed point (11), and **in that** the lubricating oil line (9) comprises a cooling device (12) for cooling the withdrawn lubricating oil, and **in that**, between the cooling device (12) and the feed point (11) lubricating oil line (9) comprises a cooling device (12) for cooling the removed lubricating oil, and **in that** a measuring device (15) for determining the relative water content in the removed lubricating oil is arranged between the cooling device (12) and the injection point (11).

2. System according to claim 1,
**characterized in that**
the at least one lubrication point (2) comprises a rolling bearing and/or a plain bearing and/or a toothed gear.

3. System according to claim 1 or 2,
**characterized in that**
the lubricating oil circuit (3) has at least one heating device (7) for heating the lubricating oil.

4. System according to claim 3,
**characterized in that**
the lubricating oil circuit (3) is connected to the lubricating oil reservoir directly or indirectly by a bypass line downstream of the heating device (7) and upstream of the at least one lubrication point (2) as viewed in the direction of flow.

5. System according to any of the preceding claims,
**characterized in that**
the withdrawal point (10) is arranged in the pressure line or in the suction line of the at least one feed pump (5).

6. System according to any of the preceding claims,
**characterized in that**
the feed point (11) is arranged on the lubricating oil reservoir (4) or on the bypass line (17) or on the lubricating oil circuit (3).

7. System according to any of the preceding claims,
**characterized in that**
the cooling device (12) comprises a heat exchanger supplied with cooling water.

8. System according to one of the preceding claims,
**characterized in that**
for determining the relative water content in the lubricating oil in the lubricating oil line by the measuring device (15), the cooling device (12) can be operated in such a way that a predeterminable measuring temperature of the lubricating oil can be set downstream of the cooling device (12).

9. System according to claim 8,
**characterized in that**
the measuring temperature essentially corresponds to the room temperature, especially when the machine is at a standstill.

10. Method for operating a system for supplying at least one lubrication point (2) of a machine with lubricating oil, in particular a machine for producing, machining and processing fibrous webs, the system comprising the following components which are hydraulically connected by lines to form a lubricating oil circuit (3): a lubricating oil reservoir (4), at least one feed pump (5), a heat exchanger (6) for cooling the circulating lubricating oil and at least one lubrication point (2), wherein the at least one lubrication point (2) is in turn hydraulically connected to the lubricating oil reservoir and wherein the lubricating oil circuit (3) is flowed through by the lubricating oil in a flow direction, **characterized in that**
a lubricating oil line (9) is provided for withdrawing a partial quantity of lubricating oil from the lubricating oil circuit (3) at a withdrawal point (10) and feeding (11) the withdrawn lubricating oil to the lubricating oil circuit (3) at a feed point (11), and **in that** the withdrawn lubricating oil is cooled by a cooling device (12) and the relative water content in the withdrawn lubricating oil is determined between the cooling device (12) and the feed point (11).

11. Method according to claim 10,
**characterized in that**
the relative water content in the removed lubricating oil is determined by the measuring device (15) at a predeterminable measuring temperature and the predeterminable measuring temperature is set by the operating mode of the cooling device (12).

12. Method according to claim 11,
**characterized in that**
the room temperature is essentially specified as the measuring temperature, particularly when the machine is at a standstill.

## Revendications

1. Installation (1) pour l'alimentation en huile de lubrification d'au moins un point de lubrification (2) d'une machine, en particulier d'une machine pour la fabrication, le traitement et la transformation de bandes de matière fibreuse, comprenant les composants suivants, reliés hydrauliquement par des conduites à un circuit d'huile de lubrification (3) : un réservoir d'huile de lubrification (4), au moins une pompe d'alimentation (5), un échangeur de chaleur (6), pouvant de préférence fonctionner avec de l'eau de refroidissement, pour refroidir l'huile de lubrification en circulation et au moins un point de lubrification (2), le au moins un point de lubrification (2) étant à son tour relié hydrauliquement au réservoir d'huile de lubrification (4) par une conduite et le circuit d'huile de lubrification (3) étant traversé par l'huile de lubrification dans une direction d'écoulement,
**caractérisé en ce que**
une ligne d'huile de lubrification (9) est prévue et réalisée pour prélever une quantité partielle d'huile de lubrification du circuit d'huile de lubrification (3) en un point de prélèvement (10) et pour renvoyer l'huile de lubrification prélevée dans le circuit d'huile de lubrification (3) en un point d'introduction (11), et **en ce que** le circuit d'huile de lubrification (9) est équipé d'un dispositif de réglage (10). circuit d'huile de lubrification (9) comprend un dispositif de refroidissement (12) pour refroidir l'huile de lubrification prélevée et **en ce qu'**entre le dispositif de refroidissement (12) et le point d'introduction (11) est disposé un dispositif de mesure (15) pour déterminer la teneur en eau relative dans l'huile de lubrification prélevée.

2. Installation selon la revendication 1,
**caractérisé en ce que**
le au moins un point de lubrification (2) comprend un palier à roulement et/ou un palier lisse et/ou un engrenage.

3. Installation selon la revendication 1 ou 2,
**caractérisé en ce que**
le circuit d'huile de lubrification (3) comporte au moins un dispositif de chauffage (7) pour chauffer l'huile de lubrification.

4. Installation selon la revendication 3,
**caractérisé en ce que**
vu dans le sens d'écoulement, après le dispositif de chauffage (7) et avant l'au moins un point de lubrification (2), le circuit d'huile de lubrification (3) est relié directement ou indirectement au réservoir d'huile de lubrification par une conduite de dérivation.

5. Installation selon l'une des revendications précédentes,
**caractérisé en ce que**
le point de prélèvement (10) est disposé dans la conduite de refoulement ou dans la conduite d'aspiration de la au moins une pompe d'alimentation (5).

6. Installation selon l'une des revendications précédentes,
**caractérisé en ce que**
le point d'introduction (11) est disposé sur le réservoir d'huile de lubrification (4) ou sur la conduite de dérivation (17) ou sur le circuit d'huile de lubrification (3).

7. Installation selon l'une des revendications précédentes,
**caractérisé en ce que**
le dispositif de refroidissement (12) comprend un échangeur de chaleur alimenté en eau de refroidissement.

8. Installation selon l'une des revendications précédentes,
**caractérisé en ce que**
pour déterminer la teneur en eau relative dans l'huile de lubrification dans la ligne d'huile de lubrification par le dispositif de mesure (15), le dispositif de refroidissement (12) peut être exploité de telle sorte qu'une température de mesure prédéfinissable de l'huile de lubrification peut être réglée après le dispositif de refroidissement (12).

9. Installation selon la revendication 8,
**caractérisé en ce que**
la température de mesure correspond essentiellement à la température ambiante, notamment lorsque la machine est à l'arrêt.

10. Procédé d'exploitation d'une installation pour alimenter en huile de lubrification au moins un point de lubrification (2) d'une machine, en particulier une machine de fabrication, de traitement et de transformation de bandes de matière fibreuse, l'installation comprenant les composants suivants, reliés hydrauliquement par des conduites à un circuit d'huile de lubrification (3) : un réservoir d'huile de lubrification (4), au moins une pompe d'alimentation (5), un échangeur de chaleur (6) pour refroidir l'huile de lubrification en circulation et au moins un point de lubrification (2), le au moins un point de lubrification (2) étant à son tour relié hydrauliquement au réservoir d'huile de lubrification et le circuit d'huile de lubrification (3) étant traversé par l'huile de lubrification dans un sens d'écoulement, **caractérisé en ce que**
une ligne d'huile de lubrification (9) est prévue pour prélever une quantité partielle d'huile de lubrification du circuit d'huile de lubrification (3) en un point de prélèvement (10) et pour renvoyer (11) l'huile de lubrification prélevée dans le circuit d'huile de lubrification (3) en un point d'introduction (11), et **en ce que** l'huile de lubrification prélevée est refroidie par un dispositif de refroidissement (12) et la teneur en eau relative dans l'huile de lubrification prélevée est déterminée entre le dispositif de refroidissement (12) et le point d'introduction (11).

11. Procédé selon la revendication 10,
**caractérisé en ce que**
la teneur en eau relative dans l'huile lubrifiante prélevée est déterminée par le dispositif de mesure (15) à une température de mesure pouvant être prédéterminée et la température de mesure pouvant être prédéterminée est réglée par le mode de fonctionnement du dispositif de refroidissement (12).

12. Procédé selon la revendication 11,
**caractérisé en ce que**
la température de mesure est essentiellement la température ambiante, en particulier lorsque la machine est à l'arrêt.
